# EUROPEAN PATENT SPECIFICATION

(11) **EP 3 021 658 B1**
(45) Date of publication and mention of the grant of the patent: **26.02.2020**
(21) Application number: 14739398.7
(22) Date of filing: 10.07.2014
(51) Int. Cl.: A01F 15/07

(54) **BALER**
BALLENPRESSE
PRESSE À BALLES

(30) Priority: 17.07.2013 GB 201312758
(43) Date of publication of application: 25.05.2016
(60) Divisional application: 19194207.7
(73) Proprietor: Kuhn-Geldrop B.V., 5667 KP Geldrop (NL)
(72) Inventor: VAN DEN BOOMEN, Benny Petrus Lambertus Martinus, 5595 GC Leenderstrijp (NL); VERHAEGH, Thomas Garardus Maria, 5943 AJ Lomm (NL)
(74) Representative: Raynor, Simon Mark
(86) International application number: PCT/EP2014/064876
(87) International publication number: WO 2015/007623

(56) References cited:
- WO-A1-2011/018455
- WO-A2-2011/067681
- DE-A1-102004 033 252
- DE-U1- 8 912 253
- US-A1- 2005 109 007

## Description

The present invention relates to a baler and in particular but not exclusively to a baler for baling an agricultural crop. More specifically, the invention relates to improvements in a film binding system on a baler.

Balers for forming cylindrical bales of agricultural crop material are well known, and such bales are usually referred to as "round" bales. The baler has a bale-forming chamber, means for feeding crop material into the chamber, and an arrangement of pressing elements, for example a series of circumferentially spaced rollers, which define a part-cylindrical surface of the chamber and within which a cylindrical bale can be formed. As is well known in the art, balers can be of the "fixed chamber" or "variable chamber type", and the present invention is applicable to both types.

DE 102004033252 A1 describes a round baler in which a binding material is introduced between two rollers into the compression chamber of the baler. A retaining means is provided to prevent the binding material from escaping through a gap between the rollers.

US 2005/0109007 A1 describes a round baler having a set of bale forming belts, in which a netwrap material is used to bind the bale. A guide is provided to prevent entanglement between the leading end of the netwrap and a pickup.

Prior art balers with binding systems whereby a net or film binding material is bundled before being introduced into the bale chamber are disclosed in:
EP1170984
WO2011/067681

The process of baling as well as the process of binding with bundled film is described in these documents.

After compressing the agricultural material in a round baler the bale in the bale chamber has to be bound with binding material in order to keep the compressed material together and under pressure.

In many balers the bale material is bound using net material. Lately also devices have been developed that use film to bind the bale.

When the bale material in the bale chamber is sufficiently compressed the film is introduced into the bale chamber between the pressing elements and the compressed material. The pressing elements are typically rollers but could also be other elements e.g. endless belts. The film is guided around the bale for several turns. The several layers of the film stick together and the film holds the compressed bale material in its compressed round shape, after which the bale can be ejected by opening the tailgate of the bale chamber.

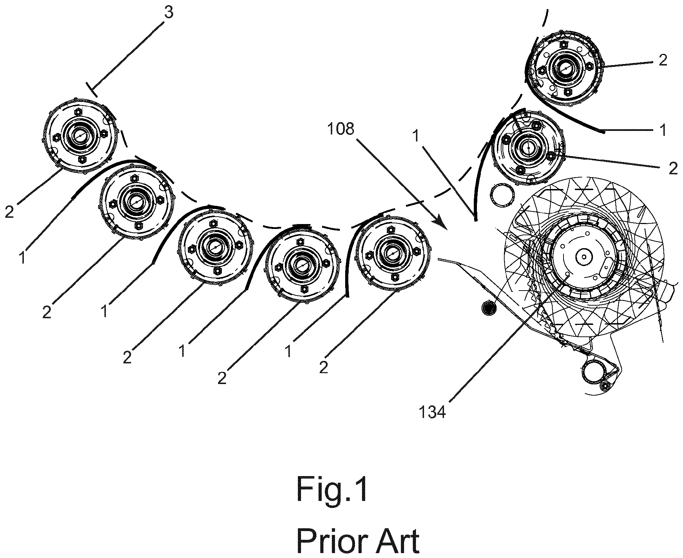

As illustrated in Fig. 1, a problem with binding the bale with film is that at the start of the binding process the lead-in 1 (the leading end of the film) that is fed between the compressed material 3 and the pressing elements 2 does not always follow the surface of the compressed bale material 3 to form the circular enclosure of the bale. Instead, as shown in Fig. 1, the lead-in 1 sometimes follows the surface of the pressing elements 2 with the result that the lead-in 1 may then leave the bale chamber and possibly may also wind around the pressing elements 2. This problem typically occurs during the first turn of the film around the bale. A bale that is not covered with film will fall apart when it is ejected from the bale chamber, which causes a lot of problems and requires re-baling of the bale material.

As described in the prior art documents listed above, this problem can be reduced by bundling the lead-in of the film to form a rope-like element, which is then introduced into the bale chamber. The bundle of film is stiffer than the non-bundled film and has a reduced tendency to stick to the pressing elements and wind around these pressing elements and/or leave the bale chamber. However, in practice it has proven that bundling the film is not sufficient to fully eliminate the problem.

It is an object of the present invention to provide a baler that mitigates one or more of the aforesaid problems.

According to one variant, not being an embodiment of the invention, there is provided a baler that includes a plurality of pressing elements for pressing a mass of bale material in a bale chamber to form a round bale, and a binding apparatus for binding the bale in the bale chamber with film material, wherein at least one blocking element is provided between an adjacent pair of pressing elements to block the passage of a lead-in end of the film material between the pair of pressing elements.

The blocking element prevents the lead-in end of the film wrapper from passing between the pressing elements. As more of the feed-in end is fed into the gap between the pressing elements, the feed-in end buckles and it is then caught between the rotating pressing element and the bale in the bale chamber, and taken back into contact with the bale surface. Binding of the bale can therefore continue uninterrupted. This greatly reduces the risk that the bale will not be properly bound and so avoids or greatly reduces the risk that the bale will burst when ejected from the bale chamber. This allows more efficient working of the baler.

Advantageously, the blocking element may have a width that is less than the width of the bale chamber, or optionally less than 50% of the width of the bale chamber, or optionally less than 25% of the width of the bale chamber, to allow dirt and debris to escape easily from the bale chamber without being impeded by the blocking element, and without accumulating on the blocking element.

Advantageously, the blocking element may be provided in a gap between an adjacent pair of pressing elements, so as to catch the lead-in end of the film wrapper as it passes between the pressing elements.

Advantageously, the blocking element may be positioned outside the periphery of the bale chamber, but very close to the bale chamber, for example within the circle defined by the outer surfaces of the pressing elements. This ensures that the lead-in end is captured quickly and fed back into contact with the bale surfaces as soon as it starts to come away from the bale surface and pass through the gap between the pressing elements.

Advantageously, the blocking elements may be retractable away from the bale chamber to allow dirt and debris to escape easily from the bale chamber without being impeded by the blocking element, and without accumulating on the blocking element.

Advantageously, the blocking element may comprise a substantially U-shaped channel element, to capture the lead-in end efficiently and effectively.

Advantageously, the baler may include a plurality of blocking elements that are separated widthwise from one another with regard to the width of the bale chamber. The blocking elements may be positioned to block the lead-in portions of a plurality of strips of binding film. By providing a plurality of blocking elements a greater part of the width of the bale chamber can be covered while still leaving gaps for dirt and debris to escape from the bale chamber.

Advantageously, the plurality of blocking elements may have a combined width that is less than the width of the bale chamber, or optionally less than 50% of the width of the bale chamber, or optionally less than 25% of the width of the bale chamber, to allow dirt and debris to escape easily from the bale chamber without being impeded by the blocking elements, and without accumulating on the blocking elements.

According to another variant, not being an embodiment of the invention, there is provided a baler that may include a plurality of pressing elements for pressing a mass of bale material in a bale chamber to form a round bale, and a binding apparatus for binding the bale in the bale chamber with film material, wherein at least one endless belt is provided that extends around two or more of the pressing elements to block the passage of a lead-in end of the film between the pair of pressing elements.

The belt prevents the lead-in end of the film wrapper from passing between the pressing elements and feeds it back into contact with the bale surface. Binding of the bale can therefore continue uninterrupted. This greatly reduces the risk that the bale will not be properly bound and so avoids or greatly reduces the risk that the bale will burst when ejected from the bale chamber. This allows more efficient working of the baler.

Advantageously, the belt has a width that is less than the width of the bale chamber, or optionally less than 50% of the width of the bale chamber, or optionally less than 25% of the width of the bale chamber, to allow dirt and debris to escape easily from the bale chamber without being impeded by the belt, and without accumulating on the belt or between the belt and the pressing elements.

Advantageously, the baler may include a plurality of endless belts that extend around two or more of the pressing elements, wherein the belts are separated widthwise from one another with regard to the width of the bale chamber. The belts may be positioned to block the lead-in portions of a plurality of strips of binding film. By providing a plurality of belts a greater part of the width of the bale chamber can be covered while still leaving gaps for dirt and debris to escape from the bale chamber.

Advantageously, the plurality of belts may have a combined width that is less than the width of the bale chamber, or optionally less than 50% of the width of the bale chamber, or optionally less than 25% of the width of the bale chamber, to allow dirt and debris to escape easily from the bale chamber without being impeded by the belt or belts, and without accumulating on the belts.

According to an aspect of the invention there is provided a baler including a plurality of pressing elements for pressing a mass of bale material in a bale chamber to form a round bale, a feed opening through which bale material is fed into the bale chamber, and a binding apparatus for binding the bale in the bale chamber with at least one strip of film material; wherein the binding apparatus includes a bundling means for bundling a lead-in end of the film material to form a rope-like element having a width less than the full width of the film material, and at least one guide element is provided adjacent the feed opening to press the lead-in end of the film towards the bale material in the bale chamber and/or to prevent the passage of the lead-in end outwards through the feed opening, wherein the number of guide elements depends on the number of strips of film material fed into the bale chamber, wherein each guide element is positioned to press the lead-in end of the film towards the bale material in the bale chamber and/or to prevent the passage of the lead-in end outwards through the feed opening, each guide element has a width that is less than the width of the bale chamber and, if the baler includes a plurality of guide elements, the guide elements have a combined width that is less than the width of the bale chamber..

The guide element prevents the lead-in end of the film wrapper from exiting the bale chamber through the feed inlet and feeds it back into contact with the bale surface. Binding of the bale can therefore continue uninterrupted. This greatly reduces the risk that the bale will not be properly bound and so avoids or greatly reduces the risk that the bale will burst when ejected from the bale chamber. This allows more efficient working of the baler.

Advantageously, the guide element has a width that is optionally less than 50% of the width of the bale chamber, or optionally less than 25% of the width of the bale chamber, to allow a substantially unimpeded flow of crop material through the feed opening, and to allow dirt and debris to escape easily from the bale chamber without being impeded by the guide element, and without accumulating on the guide element.

Advantageously, the at least one guide element may be flexible and/or pivotable and may be deflected inwards towards the bale chamber to allow a substantially unimpeded flow of crop material through the feed opening. The guide element may also optionally have a degree of flexibility outwards from the bale chamber. However, the amount that it can be pivoted outwards from the bale chamber will generally be limited by a stop mechanism.

Advantageously, the baler may include a plurality of guide elements that are separated widthwise from one another with regard to the width of the bale chamber. The guide elements may be positioned to guide the lead-in portions of a plurality of strips of binding film. The widthwise separation of the guide elements allows them to avoid impeding the flow of crop material into the baler and allows dirt and debris to escape easily from the bale chamber without accumulating on the guide element.

Advantageously, the plurality of guide elements may have a combined width that is optionally less than 50% of the width of the bale chamber, or optionally less than 25% of the width of the bale chamber.

According to another variant, not being an embodiment of the invention, there is provided a baler that includes a plurality of pressing elements for pressing a mass of bale material in a bale chamber to form a round bale, and a binding apparatus for binding the bale in the bale chamber with film material, wherein the baler further includes a film guide structure for guiding the film material after it has been introduced into the bale chamber, said film guide structure comprising one or more of:
a. at least one blocking element between an adjacent pair of pressing elements to block the passage of a lead-in end of the film material between the pair of pressing elements;
b. at least one endless belt that extends around two or more of the pressing elements to block the passage of a lead-in end of the film between the pressing elements, or
c. at least one guide element adjacent the feed opening, said guide element being configured to press a lead-in end of the film towards the bale material in the baler and/or to prevent the passage of the lead-in end outwards through the feed opening.

Advantageously, the film guide structure has a width that is less than the width of the bale chamber, or optionally less than 50% of the width of the bale chamber, or optionally less than 25% of the width of the bale chamber, to allow dirt and debris to escape easily from the bale chamber without being impeded by the film guide structure, and without accumulating on the film guide structure.

Advantageously, the pressing elements may comprise rotary rollers, which may be driven rollers and/or idler rollers.

By bundling the lead-in portion its stiffness can be increased, making it easier to feed the film material into the bale chamber.

Advantageously, the baler may be a fixed chamber round baler. The baler is preferably an agricultural baler that is configured for baling an agricultural crop material. Advantageously, the baler may include a pick-up apparatus for picking up bale material (e.g. crop material) from the ground and feeding it to the bale chamber for baling.

Certain embodiments of the invention will now be described by way of example, wherein:
Figure 1 is a side view of part of the bale chamber of a known round baler;
Figures 2A, 2B and 2C are side views of part of the bale chamber of a baler, not being an embodiment of the invention;
Figure 3 is a side view of part of the bale chamber of a baler, not being an embodiment of the invention;
Figure 4 is an isometric view of part of the bale chamber of a baler according to a first embodiment of the invention;
Figure 5 is a side view of part of the bale chamber of a baler according to a second embodiment of the invention; and
Figure 6 is a sectional side view of a baler, illustrating some common components thereof.

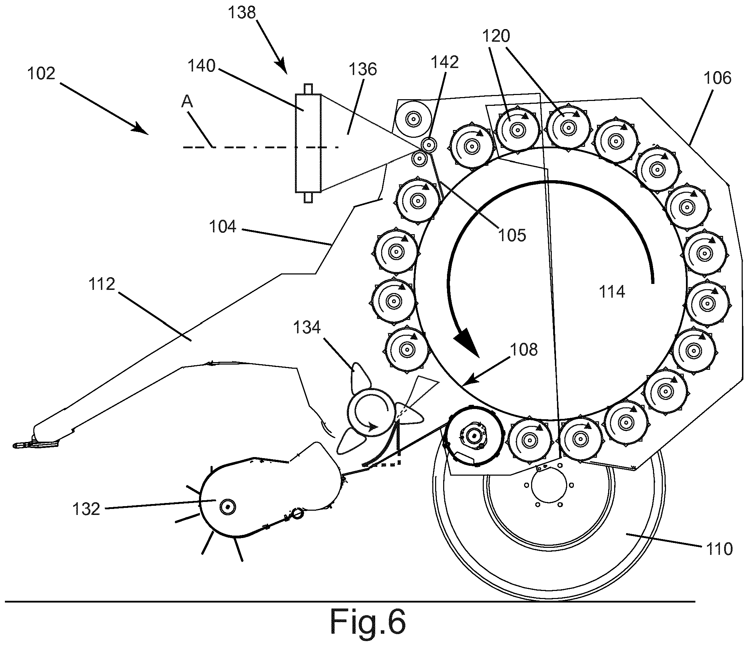

Referring first to Figure 6, this shows the main components of a typical round baler 102 of the fixed chamber type. The baler 102 includes a housing 104 having a tailgate 106 that can pivot open to release a bale after it has been formed. The baler 102 is mounted on wheels 110 and has a tow bar 112 allowing it to be towed by an agricultural vehicle such as a tractor (not shown). The baler 102 is configured to be driven from the power take off unit (not shown) of the tractor.

The baler 102 includes a bale chamber 114 within which a round (cylindrical) bale of crop material can be formed. The shape of the bale chamber 114 is defined the side walls of the housing 104 and the tailgate 106 and by a set of pressing elements, which in this case comprise rollers 120.

Some or all of the rollers 120 may be driven via the power take-off unit, causing bale material within the bale chamber 114 to rotate.

The bale chamber 114 has a feed opening 108 between two of the rollers through which crop material can be fed into the bale chamber 114 for baling. The baler also includes a pick-up mechanism 132 for picking up crop material from the ground and optionally a cutter 134 for cutting the crop material before feeding it into the bale chamber 114. The crop material is circulated within the bale chamber 114 by the rotating rollers 120, thereby forming a round bale.

When the bale has been formed it is bound with one or more layers of film 136, which is taken from a binding device 138 and introduced into the bale chamber 114 between two of the rollers 120, or optionally through the feed opening 108. The binding device 138 may for example be of the type described in WO2011/067681, having one or more reels 140 of film and a pair of guide rollers 142 that guide the film 136 into the bale chamber 114. The reels 140 can be rotated about a substantially horizontal axis **A** between a vertical position as shown in Fig. 6 and a horizontal position (not shown) in which the rotary axes of the reels 140 are parallel to the axes of the guide rollers 142. At the start of the binding process the reels 140 are located in the vertical position, perpendicular to the axes of the guide rollers 142, and as a result the film 136 is bundled to form a rope-like lead-in portion 105, which is fed into the bale chamber 114. Once the film 136 has been successfully fed into the bale chamber 114 the rollers 140 are rotated to the horizontal position, allowing the film 136 to expand to its full width so that it covers the entire outer circumference of the round bale.

In one embodiment, the binding apparatus 138 includes two reels 140, which are located side-by-side widthwise across the bale chamber 114, so that the two strips of film each cover roughly half the width of the bale with a degree of overlap. Therefore, when the lead-in portions 105 are fed into the bale chamber 114 they enter the bale chamber at different positions relative to the width of the bale chamber and lie side-by-side on the cylindrical surface of the round bale.

Once the bale has been bound the tailgate 106 is opened and the completed bale is ejected from the bale chamber 114 onto the ground.

All the aforesaid features are conventional and will not therefore be described in further detail.

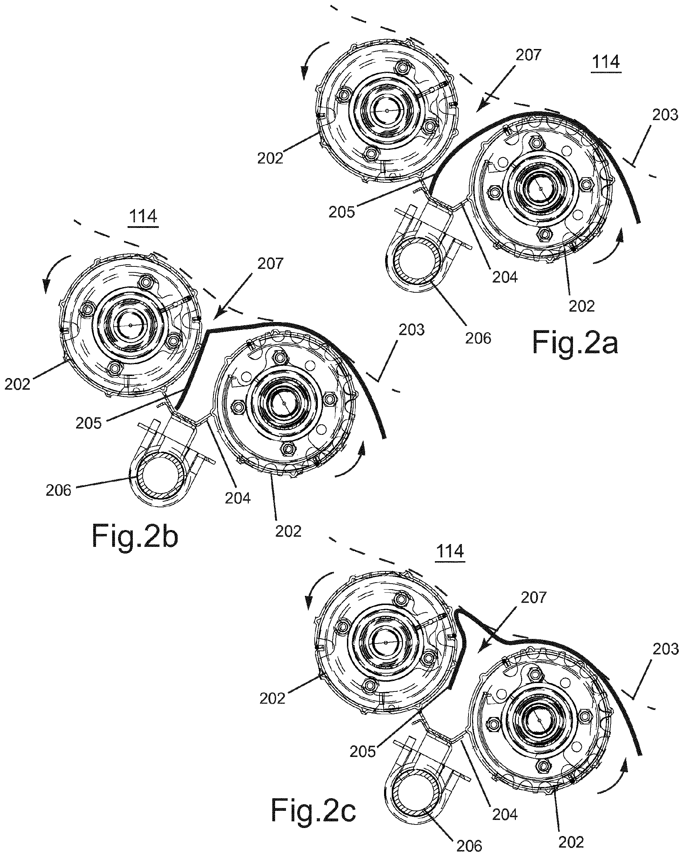

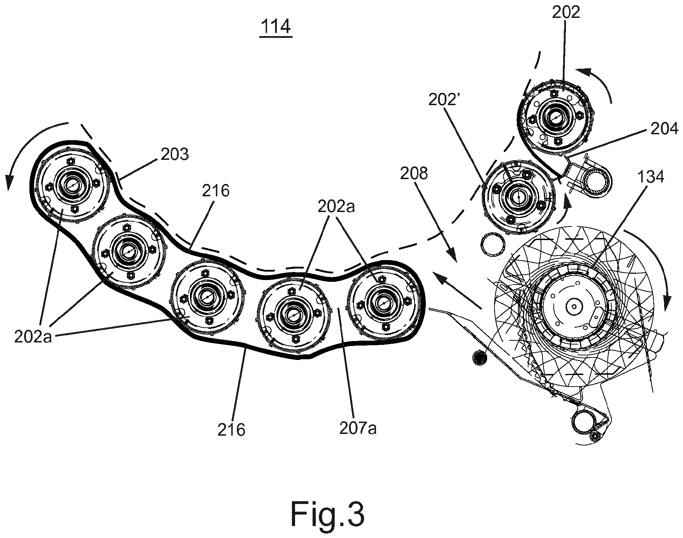

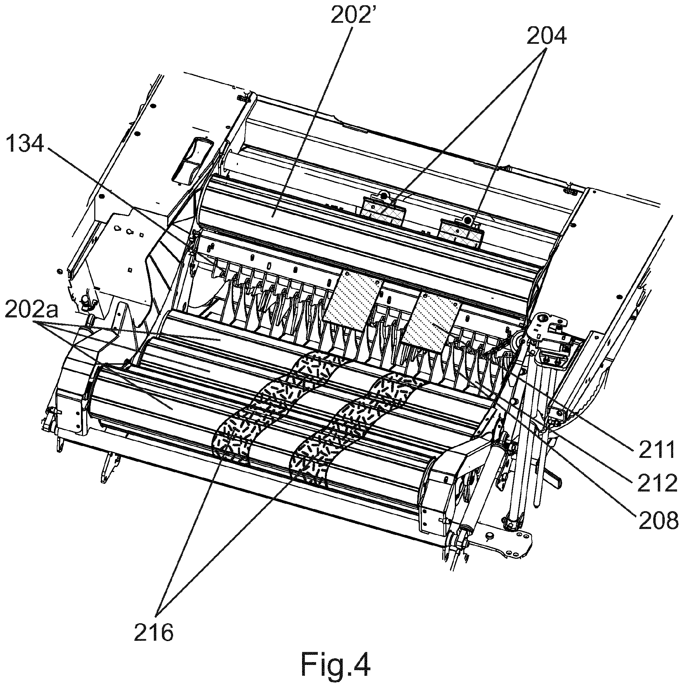

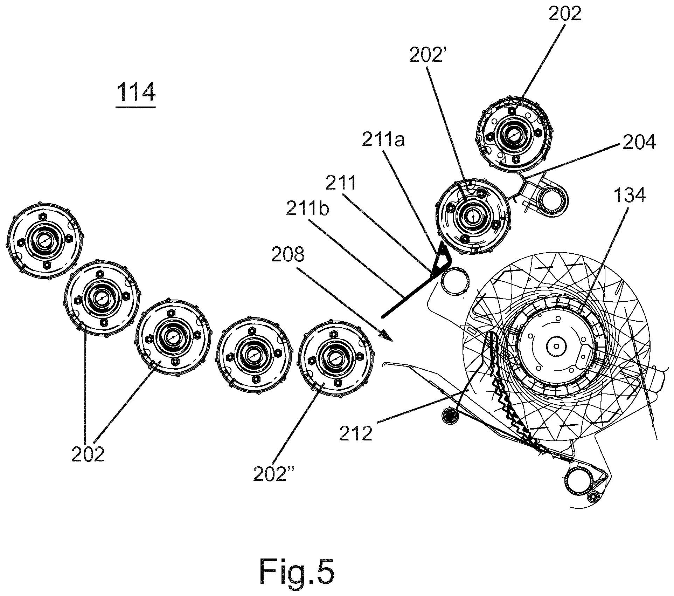

The present invention provides various improvements to a baler, for example of the general type shown in Fig. 6, which individually or in combination mitigate at least some of the problems described above with reference to Fig. 1. These individual aspects of the invention are discussed below.
A A first feature, not being an embodiment of the invention, is illustrated in Figs. 2A, 2B and 2C, which show two of the rotating pressing elements or rollers 202 that press against the surface 203 of the bale material to compress the material during formation of a round bale. The axes of the adjacent rollers 202 are spaced apart by a distance greater than the diameter of the rollers, thus leaving a gap 207 between the rollers. A blocking element 204 comprising a substantially U-shaped channel section is positioned in this gap on the outer side of the rollers 202, to block the passage of a lead-in part 205 of the wrapping film if it is diverted away from the surface 203 of the bale into the gap 207 between the rollers 202.
   Because the blocking element 204 only has to block the relatively narrow lead-in portion 205 of the film, it generally has a width that is considerably less than the width of the bale chamber 114. This provides the advantage that is does not impede the flow of dirt and debris out of the bale chamber. For example, it may typically have a width of about 10-15cm, compared to a bale chamber width of typically 120cm. The blocking element 204 is supported by a support element 206 that extends across the width of the bale chamber. This support element 206 may either be fixed in position or it may be configured to be retractable so as to withdraw the blocking element 204 away from the gap 207 between the rollers 202, to allow dirt and debris to escape more easily from the bale chamber. An actuator (not shown) may be provided for moving the support element 206 and the blocking element 204 between the blocking and non-blocking positions, the blocking element being positioned in the blocking position only while the lead-in portion 205 of the film bundle is being fed into the bale chamber 114.
   Therefore, to prevent the lead-in 205 of the film bundle from leaving the bale chamber 114 and being diverted away from the circumference 203 of the compressed bale material, at least one blocking element 204 is positioned outside the volume occupied by the compressed material and in-between and/or adjacent to outer surface of the pressing elements 202.
   When the lead-in 205 of the film bundle diverts from the surface 203 of the compressed material and moves away from the bale chamber into the gap 207 between adjacent pressing elements 202, the lead-in 205 is blocked by the blocking element 204 as shown in Fig. 2A. As more of the film bundle 205 is fed into the gap 207 between the pressing elements 202, the lead-in 205 of the bundle buckles as shown in Fig. 2B and is caught as shown in Fig 2C by the second (downstream) pressing element 202, which then pulls the lead-in 205 back towards the surface 203 of the bale.
   Although the blocking element 204 may in certain circumstances extend over the full width of the bale chamber/pressing elements, preferably only a small part of the full width is provided with a blocking element 204. In the example shown in Fig. 4, two blocking elements 204 are provided, which are positioned to block the lead-in portions 205 of two separate strips of film that are fed into the bale chamber from separate reels. It will be understood that the number of blocking elements provided will depend on the number of strips of film fed into the bale chamber, so if only one strip of film is fed into the bale chamber only one blocking element will be required, if three strips of film are used there will be three blocking elements, and so on.
   The blocking elements 204 are located only in the gap before the last roller 202' before the feed opening 208 where the lead-in end 205 of the film bundle is introduced into the bale chamber. In this example, each blocking element 204 has a width of about 10 cm and the bale chamber 114 has a width of 120cm. The total combined width of the two blocking elements is therefore 20cm, which represents about 17% of the bale chamber width. More generally, the total width of the blocking element or elements is preferably less than 50% of the bale chamber width, and more preferably less than 25% of the bale chamber width. An advantage of using a blocking element that extends over only a relatively small part of the width is that less crop material/dirt is caught by the blocking element. This material/dirt tends to cause problems during baling and binding.
   Because the lead-in 205 has a tendency to leave the bale chamber between successive pressing elements 202 that have a relatively large space between them, for instance between pressing elements that are mounted on different parts of the frame design e.g. the front part or rear part of the bale chamber, it is especially important that those pressing elements are provided with blocking elements 204. Therefore, blocking elements are preferably provided in the gap between the two rollers positioned on either side of the tailgate opening.
B A second variant, not being an embodiment of the invention, is illustrated Figs. 3 & 4. In order to prevent the lead-in 205 from leaving the baling chamber between successive pressing elements 202, two or more successive pressing elements 202a may be provided with an endless belt or belts 216 that pass around the pressing elements. Because the openings 207a through which the lead-in 205 could leave the bale chamber 114 are closed by the belts 216, the lead-in 205 will always follow the surface 203 of the compressed bale material. Preferably each endless belt 216 has a limited width, for example 10 cm, and is positioned immediately downstream of the point where the lead-in 205 of the bundled film is introduced into the bale chamber 114.
   In the example shown in Fig. 4 two belts 216 provided, which are positioned to catch the lead-in portions 205 of two separate strips of film that are fed into the bale chamber from separate reels. It will be understood that the number of belts 216 will depend on the number of strips of film fed into the bale chamber, so if only one strip of film is fed into the bale chamber only one belt will be required, if three strips of film are used there will be three belts, and so on.
   Each belt 216 has a width of about 10 cm and the bale chamber 114 has a width of 120cm. The total combined width of the two belts 216 is therefore 20cm, which represents about 17% of the bale chamber width. More generally, the total width of the belt or belts is preferably less than 50% of the bale chamber width, and more preferably less than 25% of the bale chamber width. This helps to ensure that the belts 216 do not collect more dirt than necessarily required and if dirt is collected or caught, this dirt can easily be removed.
C An embodiment of the invention is illustrated in Figs. 4 & 5. A special part of the bale chamber 114 is the position of the feed opening 208 through which conventionally the bale material is introduced into the bale chamber by the cutting and feeding rotor 134.

Because there has to be an opening for the bale material to be introduced, the feed opening 208 between the successive last pressing element 202' and the first pressing element 202" is typically more than 25 cm. During binding of the bale typically the feeding of bale material into the bale chamber 114 is stopped, the tractor is stopped and no material is picked up and fed into the bale chamber 114. In order to prevent the lead-in 205 of the film bundle separating from the compressed material and leaving the trough of the bale chamber through the empty feed opening 208, one or more guide elements 211 are provided between the last pressing element 202' before the feed opening 208 and the first pressing element 202" after the feed opening 208. The or each guide element 211 is configured to at least partly bridge this feed opening 208.

In use, the or each guide element 211 holds the lead-in 205 of the film bundle towards the surface 203 of the rotating compressed bale material, which carries the lead-in 205 forward towards the first pressing element 202".

The or each guide element 211 is only of a limited width so that it has only a limited effect on the flow of the bale material through the feed opening 208. In the example shown in Fig. 4 two guide elements 211 are provided, which are positioned to engage the lead-in portions 205 of two separate strips of film that are fed into the bale chamber from separate reels. It will be understood that the number of guide elements provided will depend on the number of strips of film fed into the bale chamber, so if only one strip of film is fed into the bale chamber only one guide element will be required, if three strips of film are used there will be three guide elements, and so on.

Each guide element 211 has a width of about 10cm, and the bale chamber 114 has a width of 120cm. The total combined width of the two guide elements 211 is therefore 20cm, which represents about 17% of the bale chamber width. More generally, the combined width of the guide elements is preferably less than 50% of the bale chamber width, and more preferably less than 25% of the bale chamber width.

The guide element or elements 211 are positioned where the lead-in 205 of the film bundle is introduced into the bale chamber 114. Preferably each guide element 211 is supported by a mount 211a at one end of the guide element and at least part 211b of the guide element is flexible. The flexible part 211b ensures that the flow of bale material through the feed opening 208 towards the bale chamber 114 is not obstructed by the guide element 211. Preferably the guide element 211 is flexible and/or pivotable inwards in the direction of the bale chamber 114 so that material introduced into the bale chamber can press the guide element 211 further in the direction of the bale and so create more space for bale material to be introduced into the bale chamber. However, the guide element 211 is preferably stiff and/or has limited pivoting movement in the outward direction away from the bale chamber 114 so as to prevent the compressed bale material expanding outwards in the direction of the feed opening 208.

Optionally, the guide element 211 may be retractable from the feed opening 208, to avoid obstructing the passage of bale material through the passage. In this case the guide element 211 will be positioned in the guiding position within the feed opening only while the lead-in portion 205 of the film bundle is being fed into the bale chamber 114.

Preferably at the position of the guide elements 211 the intake system in front of the feed opening 208 of the bale chamber is provided with one or more knives 212, which cooperate with the cutting and feeding rotor 134 to cut the bale material that is fed into the bale chamber 114. The cut material is not pulled fully into the bale chamber 114 when the feeding is stopped and the material that is not fed into the baling chamber 114 then supports the flexible part 211b of the guide element 211 to better guide the lead-in 205 of the film bundle towards the first pressing element 202".

According to one variant, not being an embodiment of the invention, there is provided a baler that includes a plurality of pressing elements and a binding apparatus for binding a bale with film, wherein at least one blocking element is provided between an adjacent pair of pressing elements to block the passage of a lead-in end of the film between the pair of pressing elements.

According to another variant, not being an embodiment of the invention there is provided a baler that includes a plurality of pressing elements and a binding apparatus for binding a bale with film, wherein at least one endless belt is provided that extends around a pair of pressing elements to block the passage of a lead-in end of the film between the pair of pressing elements.

According to an embodiment of the invention there is provided a baler that includes a feed opening through which bale material is fed into the baler, a plurality of pressing elements and a binding apparatus for binding a bale with film, wherein at least one guide element is provided adjacent the feed opening, said guide element being configured to press a lead-in end of the film towards the bale material in the baler and/or to prevent the passage of the lead-in end outwards through the feed opening.

## Claims

1. A baler (102) including a plurality of pressing elements (120, 202) for pressing a mass of bale material in a bale chamber (114) to form a round bale, a feed opening (208) through which bale material is fed into the bale chamber, and a binding apparatus (138) for binding the bale in the bale chamber with at least one strip of film material; wherein the binding apparatus (138) includes a bundling means (140, 142) for bundling a lead-in end of the film material to form a rope-like element having a width less than the full width of the film material, and at least one guide element (211) is provided adjacent the feed opening (208) to press the lead-in end of the film material towards the bale material in the bale chamber (114) and/or to prevent the passage of the lead-in end outwards through the feed opening (208), wherein the number of guide elements (211) depends on the number of strips of film material (205) fed into the bale chamber (114), wherein each guide element (211) is positioned to press a lead-in end of the film material towards the bale material in the bale chamber (114) and/or to prevent the passage of a lead-in end outwards through the feed opening, wherein each guide element (211) has a width that is less than the width of the bale chamber and, if the baler includes a plurality of guide elements, the guide elements have a combined width that is less than the width of the bale chamber.

2. A baler according to claim 1, wherein the guide element (211) has a width that is less than 50% of the width of the bale chamber, or optionally less than 25% of the width of the bale chamber.

3. A baler according to claim 1 or claim 2, wherein the at least one guide element (211) is flexible and/or pivotable and may be deflected inwards towards the bale chamber (114) to allow a substantially unimpeded flow of crop material through the feed opening (208).

4. A baler according to any one of claims 1 to 3, including a plurality of guide elements (211) that are separated widthwise from one another with regard to the width of the bale chamber.

5. A baler according to claim 4, wherein the plurality of guide elements have a combined width that is less than 50% of the width of the bale chamber, or optionally less than 25% of the width of the bale chamber.

6. A baler according to any one of the preceding claims, wherein the pressing elements comprise rotary rollers.

7. A baler according to any one of the preceding claims, wherein the baler is a fixed chamber round baler.

8. A baler according to any one of the preceding claims, wherein the baler is an agricultural baler that is configured for baling an agricultural crop material.

9. A baler according to any one of the preceding claims, wherein the baler includes a pick-up apparatus for picking up bale material from the ground and feeding it to the bale chamber for baling.

## Patentansprüche

1. Ballenpresse (102), beinhaltend eine Vielzahl von Presselementen (120, 202) zum Pressen einer Ballenmaterialmasse in einer Ballenkammer (114) zum Ausbilden eines Rundballens, eine Zuführöffnung (208), durch die Ballenmaterial in die Ballenkammer eingeführt wird, und eine Bindeeinrichtung (138) zum Binden des Ballens in der Ballenkammer mit wenigstens einem Streifen Folienmaterial;
wobei die Bindeeinrichtung (138) ein Bündelungsmittel (140, 142) zum Bündeln eines Einführendes des Folienmaterials beinhaltet, um ein seilartiges Element mit einer Breite auszubilden, die geringer als die volle Breite des Folienmaterials ist, und wenigstens ein Führungselement (211) neben der Zuführöffnung (208) bereitgestellt wird, um das Einführende des Folienmaterials zu dem Ballenmaterial in der Ballenkammer (114) zu drücken und/oder um den Durchgang des Einführendes nach außen durch die Zuführöffnung (208) zu verhindern, wobei die Anzahl an Führungselementen (211) von der Anzahl an in die Ballenkammer (114) eingeführten Folienstreifen (205) abhängt, wobei jedes Führungselement (211) positioniert ist, um ein Einführende des Folienmaterials zu dem Ballenmaterial in der Ballenkammer (114) zu pressen und/oder um den Durchgang eines Einführendes nach außen durch die Zuführöffnung zu verhindern, wobei jedes Führungselement (211) eine Breite aufweist, die geringer als die Breite der Ballenkammer ist und, wenn die Ballenpresse eine Vielzahl von Führungselementen beinhaltet, die Führungselemente eine kombinierte Breite aufweisen, die geringer als die Breite der Ballenkammer ist.

2. Ballenpresse nach Anspruch 1, wobei das Führungselement (211) eine Breite aufweist, die geringer als 50 % der Breite der Ballenkammer oder optional geringer als 25 % der Breite der Ballenkammer ist.

3. Ballenpresse nach Anspruch 1 oder Anspruch 2, wobei das wenigstens eine Führungselement (211) flexibel und/oder schwenkbar ist und nach innen zu der Ballenkammer (114) abgelenkt werden kann, um einen im Wesentlichen ungehinderten Erntegutmaterialfluss durch die Zuführöffnung (208) zu ermöglichen.

4. Ballenpresse nach einem der Ansprüche 1 bis 3, beinhaltend eine Vielzahl von Führungselementen (211), die bezüglich der Breite der Ballenkammer in der Breite voneinander getrennt sind.

5. Ballenpresse nach Anspruch 4, wobei die Vielzahl von Führungselementen eine kombinierte Breite aufweist, die geringer als 50 % der Breite der Ballenkammer oder optional geringer als 25 % der Breite der Ballenkammer ist.

6. Ballenpresse nach einem der vorhergehenden Ansprüche, wobei die Druckelemente Drehwalzen umfassen.

7. Ballenpresse nach einem der vorhergehenden Ansprüche, wobei die Ballenpresse eine Rundballenpresse mit fester Kammer ist.

8. Ballenpresse nach einem der vorhergehenden Ansprüche, wobei die Ballenpresse eine landwirtschaftliche Ballenpresse ist, die zum Ballenpressen eines landwirtschaftlichen Erntegutmaterials konfiguriert ist.

9. Ballenpresse nach einem der vorhergehenden Ansprüche, wobei die Ballenpresse eine Aufnahmeeinrichtung zum Aufnehmen von Ballenmaterial von dem Boden und zum Zuführen zu der Ballenkammer zum Ballen beinhaltet.

## Revendications

1. Ramasseuse-presse (102) comprenant une pluralité d'éléments presseurs (120, 202) pour comprimer une masse de matières de balle dans une chambre de pressage (114) afin de former une balle ronde, une ouverture d'admission (208) par laquelle les matières de balle sont introduites dans la chambre de pressage, et une cercleuse (138) pour lier la balle dans la chambre de pressage avec au moins une bande de matière pelliculaire ;
la cercleuse (138) comprenant un dispositif de bottelage (140, 142) pour le bottelage d'un bout d'attaque de la matière pelliculaire pour former un élément du type à corde dont la largeur est inférieure à la largeur intégrale de la matière pelliculaire, et au moins un élément de guidage (211) étant pourvu dans une position adjacente à l'ouverture d'admission (208) pour pousser le bout d'attaque de la matière pelliculaire vers les matières de balle dans la chambre de pressage (114) et/ou pour empêcher le passage du bout d'attaque vers l'extérieur à travers l'ouverture d'admission (208), le nombre d'éléments de guidage (211) étant fonction du nombre de bandes de matière pelliculaire (205) introduites dans la chambre de pressage (114), chaque élément de guidage (211) étant positionné de façon à comprimer un bout d'attaque de la matière pelliculaire vers les matières de balle dans la chambre de pressage (114) et/ou à empêcher le passage d'un bout d'attaque vers l'extérieur à travers l'ouverture d'admission, la largeur de chaque élément de guidage (211) étant inférieure à la largeur de la chambre de pressage, et, si la ramasse-presse comprend une pluralité d'éléments de guidage, la largeur combinée des éléments de guidage est inférieure à la largeur de la chambre de pressage.

2. Ramasseuse-presse selon la revendication 1, la largeur de l'élément de guidage (211) étant inférieure à 50% de la largeur de la chambre de pressage, ou, en option, inférieure à 25% de la largeur de la chambre de pressage.

3. Ramasseuse-presse selon la revendication 1 ou la revendication 2, l'au moins un élément de guidage (211) étant flexible et/ou pivotant, et pouvant être dévié vers l'intérieur en direction de la chambre de pressage (114), afin de permettre un débit substantiellement sans entrave de produits agricoles récoltés, par l'ouverture d'admission (208).

4. Ramasseuse-presse selon une quelconque des revendications 1 à 3, comprenant une pluralité d'éléments de guidage (211) séparés l'un de l'autre, dans le sens de la largeur, relativement à la largeur de la chambre de pressage.

5. Ramasseuse-presse selon la revendication 4, la largeur combinée de la pluralité des éléments de guidage étant inférieure à 50% de la largeur de la chambre de pressage, ou, en option, inférieure à 25% de la largeur de la chambre de pressage.

6. Ramasseuse-presse selon une quelconque des revendications précédentes, les éléments presseurs comprenant des rouleaux rotatifs.

7. Ramasseuse-presse selon une quelconque des revendications précédentes, la ramasseuse-presse étant une ramasseuse-presse ronde à chambre fixe.

8. Ramasseuse-presse selon une quelconque des revendications précédentes, la ramasseuse-presse étant une ramasseuse-presse agricole pour le bottelage de produits agricoles.

9. Ramasseuse-presse selon une quelconque des revendications précédentes, la ramasseuse-presse comprenant un appareil de ramassage assurant le ramassage au sol de matières de balle, et les introduisant dans la chambre de pressage pour le bottelage.
